# EUROPÄISCHE PATENTANMELDUNG

(11) **EP 3 075 643 A1**
(43) Veröffentlichungstag der Anmeldung: **05.10.2016**
(21) Anmeldenummer: 16000604.5
(22) Anmeldetag: 14.03.2016
(51) Int. Cl.: B62M 6/55, B62M 6/90

(54) **ANTRIEBSVORRICHTUNG FÜR EIN ZUMINDEST TEMPORÄR UND/ODER ANTEILIG MIT MUSKELKRAFT ANTREIBBARES FAHRZEUG**

(30) Priorität: 16.03.2015 DE 102015003386
(71) Anmelder: Drive & Innovation GmbH & Co. KG, 90471 Nürnberg (DE)
(72) Erfinder: Nagler, Philipp, 91207 Lauf a.d. Pegnitz (DE)
(74) Vertreter: Liebl, Thomas

(57) **Zusammenfassung**

Antriebsvorrichtung (1) für ein zumindest temporär und/oder anteilig mit Muskelkraft antreibbares Fahrzeug (3), insbesondere Fahrrad, Rollstuhl, Tretroller, Kinderwagen, Schubkarre und dergleichen, wobei die Antriebsvorrichtung (1) eine elektrische Motoreinheit (4), eine die Motoreinheit (4) versorgende Energiespeichereinheit (5) und eine die Leistung der Motoreinheit (4) in einen Triebstrang (2) einbringbare Übertragungseinheit (6) umfasst, wobei zumindest die Motoreinheit (4) und die Energiespeichereinheit (5) lösbar am Fahrzeug (3) und voneinander lösbar befestigbar sind und die Motoreinheit (4) und die Energiespeichereinheit (5) jeweils ein Gehäuse (7, 8) umfassen, wobei zumindest das Gehäuse (7) der Motoreinheit (4) und das Gehäuse (8) der Energiespeichereinheit (5) gleichartig ausgebildet sind und an der Stirnseite des Gehäuses (7) der Motoreinheit (4) ein erstes Flanschelement (17) und an der Stirnseite des Gehäuses (8) der Energiespeichereinheit (8) ein zweites Flanschelement (20) angeordnet ist wobei die Gehäuse (7, 8) über die Flanschelemente (17, 20) miteinander lösbar verbindbar sind.

## Beschreibung

Die Erfindung betrifft eine Antriebsvorrichtung für ein zumindest temporär und/oder anteilig mit Muskelkraft antreibbares Fahrzeug, insbesondere Fahrrad, Rollstuhl, Tretroller, Kinderwagen, Schubkarre und dergleichen, wobei die Antriebsvorrichtung eine elektrische Motoreinheit, eine die Motoreinheit versorgende Energiespeichereinheit und eine, die Leistung der Motoreinheit in einen Triebstrang einbringbare Übertragungseinheit umfasst, wobei die Motoreinheit und/oder die Energiespeichereinheit lösbar am Fahrzeug befestigbar ist und die Motoreinheit und die Energiespeichereinheit jeweils ein Gehäuse umfassen.

Im Stand der Technik sind Fahrräder mit Antriebsmotoren bekannt. Beispielsweise lehrt WO 2013/007828 A2 einen Fahrradrahmen mit einem Rahmenausschnitt, der zur abnehmbaren Halterung eines separaten Energiespeichers dient. Die lösbare Einheit kann eingeklappt werden und in der eingeklappten Anordnung dient diese als Transportanordnung zum kompakteren Transport. Während des Betriebs des Elektroantriebs muss sich diese Baugruppe in seiner gestreckten Ausrichtung befinden, da nur dann beide Teile elektrisch miteinander verbunden sind. Auch passt der Elektroantrieb nur in der gestreckten Ausrichtung in den Rahmenausschnitt.

Der Stand der Technik weist den Nachteil auf, dass die dort verwendete Einheit speziell auf ein vordefiniertes Fahrzeug (Erstausrüster) ausgelegt ist und damit keine Kompatibilität zu weiteren Fahrzeugen, die nicht die gleiche, exakt definierte Ausnehmung aufweisen, besteht. Die zwei zueinander verschwenkbaren Teilbereiche der lösbaren Einheit sind in deren Funktionen nicht mit weiteren Teileinheiten konfigurierbar und bilden eine festgelegte Konfiguration. Schließlich ist die Verstaumöglichkeit der demontierten lösbaren Einheit in einem vorgegebenen Stauraum (zum Beispiel Rucksack) begrenzt. Insgesamt handelt es sich im Stand der Technik nicht um eine Antriebseinheit, welche sich auf bestehende Fahrzeuge mit geringem Aufwand nachrüsten lässt. Zusätzlich ist der erfindungsgemäße Kerngedanke der Konfigurierbarkeit insbesondere der lösbar am Fahrzeug montierten Einheiten der Antriebseinheit nicht gegeben.

Der Erfindung liegt die Aufgabe zugrunde, eine Antriebsvorrichtung für ein mit einem Triebstrang versehenes, zumindest temporär und/oder anteilig mit Muskelkraft antreibbares Fahrzeug, mit den Merkmalen des Oberbegriffs des Anspruches 1 derart weiterzubilden, dass diese sowohl einfach als auch unter Verwendung weniger Bauteile auf möglichst viele Fahrzeuge mit bestehenden Triebsträngen montierbar ist und zugleich eine hohe Variabilität der Einzelkomponenten der Antriebsvorrichtung aufweist. Ferner ist es Aufgabe die Antriebsvorrichtung derart auszubilden, dass diese möglichst einfach an unterschiedliche Einbau- und/oder Verstauräume auf einfache Weise anpassbar ist.

Diese Aufgabe wird durch eine Antriebsvorrichtung mit den Merkmalen des Anspruches 1 gelöst. Vorteilhafte Weiterbildungen der Erfindung ergeben sich aus den Unteransprüchen 2-17.

Als Kern der Erfindung wird es angesehen, dass im Bereich der Stirnseite des Gehäuses der Motoreinheit ein erstes Flanschelement und im Bereich der Stirnseite des Gehäuses der Energiespeichereinheit ein zweites Flanschelement angeordnet ist, wobei die Gehäuse über die Flanschelemente miteinander trennbar verbindbar sind. Durch die trennbare Verbindung von Energiespeichereinheit und Motoreinheit wird eine konfigurierbare Antriebseinheit erreicht. So können beispielsweise in deren Kapazität unterschiedliche Energiespeichereinheiten wahlweise über die Schnittstelle der Flanschelemente an die Motoreinheit angesetzt werden. Auch bietet die vollständig trennbare Verbindung zwischen Energiespeichereinheit und Motoreinheit den Vorteil, dass diese beiden Teile unabhängig voneinander gelagert werden können. Auch kann das Verstauen der beiden voneinander getrennten Teileinheiten zum Beispiel innerhalb eines Rucksacks leichter vorgenommen werden, als wenn diese untrennbar aneinander befestigt sind. Unter einer trennbaren Verbindung ist zu verstehen, dass die beiden Teileinheiten (Motoreinheit und Energiespeichereinheit) im demontierten Zustand voneinander losgelöst vorliegen. In einer bevorzugten Variante ist die trennbare Verbindung der Teileinheiten derart ausgebildet, dass dieses Trennen und/oder Zusammenfügen werkzeuglos, das heißt von Hand eines Bedieners ohne Zuhilfenahme eines Werkzeugs erfolgen kann. Eine derartige Ausführung hat den Vorteil, dass der Bediener schnell und auf einfache Weise das Trennen und/oder Zusammenführen vornehmen kann.

Die trennbare Befestigung der beiden Teileinheiten über die Flanschelemente kann mittelbar oder unmittelbar erfolgen. Ein Beispiel für eine mittelbare Befestigung wäre, wenn die Flanschelemente jeweils auf ein Verbindungselement angesetzt werden und über dieses miteinander verbunden sind. Vorzugsweise ist die trennbare Befestigung unmittelbar, so dass die beiden zu verbindenden Flanschelemente direkt miteinander in Eingriff stehen. Auch können die Flanschelemente derart ausgebildet sein, dass in einer ersten Konfiguration die Motoreinheit und die Energiespeichereinheit über die Flanschelemente direkt miteinander verbindbar sind und in einer zweiten Konfiguration dieselbe Motoreinheit und dieselbe Energiespeichereinheit indirekt über ein Verbindungselement verbindbar sind.

Die Energiespeichereinheit und die Motoreinheit können ähnlich oder identisch ausgebildete Flanschelemente umfassen. Vorteilhaft ist auch die Verbindung mittels Flanschelementen zwischen der Motoreinheit und der Übertragungseinheit vergleichbar oder identisch zu der Verbindung der Motoreinheit und der Energiespeichereinheit auszubilden. Diese ähnlichen oder identischen Verbindungen/Flanschelemente können auf gleichen oder gleichartigen Bauteilen beruhen und/oder auf gleichen oder gleichartigen Verbindungs-, Verriegelungs- und/oder Lösemechanismen beruhen. Die Flanschelemente sind als jeweils separate Bauteile oder Bauteilgruppen konzipiert, die an das jeweilige Gehäuse an dessen Endbereich befestigt werden.

Gemäß einer besonders bevorzugten Ausführungsform sind zumindest das Gehäuse der Motoreinheit und das Gehäuse der Energiespeichereinheit gleichartig ausgebildet. Ein weiterer Vorteil kann sich dadurch ergeben, dass das Gehäuse der Motoreinheit und das Gehäuse der Energiespeichereinheit eine gleichartige Querschnittskontur aufweisen, vorzugsweise eine im Wesentlichen identische Querschnittskontur aufweisen, besonders bevorzugt eine identische Querschnittskontur aufweisen. Dadurch, dass bevorzugt zumindest diese beiden Teileinheiten (Gehäuse der Motoreinheit und Gehäuse der Energiespeichereinheit) gleichartig ausgebildet sind, kann für die beiden Gehäuse das gleiche Ausgangsmaterial verwendet werden und/oder ein Ausgangsmaterial gleichartig bearbeitet werden. Diese Standardisierung der Bearbeitung und/oder der Bauteile selbst können die Herstellkosten des erfindungsgemäßen Antriebs reduzieren.

Neben der Gehäuse der Motor- und Energiespeichereinheit können zusätzlich oder alternativ auch das Gehäuse einer Ladeeinheit und/oder das Gehäuse der Übertragungseinheit eine mit dem Gehäuse der Energiespeichereinheit gleichartige, vorzugsweise im Wesentlichen identische, besonders bevorzugt identische Querschnittskontur aufweisen. Damit können die oben erwähnten Vorteile auch im Zusammenhang mit dem Gehäuse der Ladeeinheit und/oder der Übertragungseinheit verwirklicht werden. Die Ladeeinheit ist eine Vorrichtung zum Laden der Energiespeichereinheit und kann beispielsweise als lösbar, vorzugsweise als trennbare Einheit an die Antriebsvorrichtung temporär angeschlossen werden. Hierbei kann die Ladeeinheit eine elektrische Verbindung der Energiespeichereinheit mit einer Schnittstelle zum Hausspannungsnetz gewährleisten, wobei hierbei die Ladeeinheit vorzugsweise weitere Bauteile wie Transformatoren umfassen kann. Damit ist die erfindungsgemäße Ladeeinheit derart ausgebildet, dass sämtliche Elektronik innerhalb des Ladeeinheitsgehäuses untergebracht ist und lediglich ein Verbindungskabel und ein Stecker am freien Ende des Verbindungskabels als lösbare Teile der Ladeeinheit an dessen Gehäuse temporär zu befestigen sind.

Unter Gehäusen mit gleichartiger Querschnittskontur sind Gehäuse gemeint, deren Querschnittskontur eine ähnliche geometrische Form aufweisen. Je ähnlicher sich die Querschnittskonturen sind, desto höher ist das Potential an Einsparungen im Herstellungsprozess. So kann neben einer gleichartigen Bearbeitung, Verwendung identischer Werkzeuge im besten Fall ein identisches Bauteile - ein Gleichteil - für die Gehäuse verwendet werden.

In einer besonders bevorzugten Variante der erfindungsgemäßen Gehäuse ist vorgesehen, dass das und/oder die Gehäuse durch ein Strangpressverfahren und/oder ein Sinterverfahren gefertigt ist, vorzugsweise durch ein Kunststoffstrangpressverfahren oder durch ein Leichtmetallstrangpressverfahren, insbesondere ein Aluminiumstrangpressverfahren gefertigt ist. Beispielsweise kann ein sogenanntes Endlosprofil in einem Aluminiumstrangpressverfahren gefertigt werden, das dann auf Länge geschnitten wird und schließlich das jeweilige Gehäuse bildet. Um einer Optimierung und Anpassung der Gehäuse an die Volumenerfordernisse der einzelnen Bestandteile der Antriebsvorrichtung gerecht zu werden, kann durch einen unterschiedlichen Längenzuschnitt des Endlosprofils eine Variation der Volumina der einzelnen Gehäuse erfolgen.

Weiter hat es sich als vorteilhaft erwiesen, wenn an einer Mantelinnenfläche (innere Mantelfläche) des Gehäuses wenigstens eine sich zumindest bereichsweise axial erstreckende Materialansammlung vorgesehen ist, bevorzugt ist die Materialansammlung in Eckbereichen der Querschnittskontur angeordnet, besonders bevorzugt ist die Materialansammlungen derart ausgebildet, dass diese als Widerlager zur Einbringung von Befestigungselementen zur Halterung eines Flanschelementes an zumindest einer Stirnseite des Gehäuses verwendbar ist. Die Materialansammlung kann sich vorteilhaft auch über die überwiegende Gesamtlänge des Gehäuses erstrecken (mehr als 75% der Gesamtlänge des jeweiligen Gehäuses). Besonders bevorzugt erstreckt sich die Materialansammlung im Wesentlichen über die gesamte Länge des jeweiligen Gehäuses mit Ausnahme der Gehäuseendbereiche. Dieser Absatz im Bereich des Gehäuseendbereichs kann als Anschlag für ein Flanschelement und/oder als Widerlager zur Einbringung von Befestigungselementen zur Halterung eines Flanschelementes dienen. Die Materialansammlung ist derart gestaltet, dass sich diese im Inneren des Gehäuses befindet und sich damit nach radial innen erstreckt. Auch kann durch die Materialansammlung die äußere Grundgeometrie des Gehäuses unbeeinflusst bleiben. Mit an der Innenseite einer Mantelfläche erstreckend ist gemeint, dass das Gehäuse nach außen eine regelmäßige Querschnittsgeometrie aufweist. Beispielsweise die Form eines in der Längserstreckung überwiegend konstanten gleichseitigen Dreiecks, die Form eines gleichseitigen Fünfecks, die Form eines gleichseitigen Sechsecks, die Form eines regulären n-Ecks und/oder die Form eines Gleichdicks, wobei die Eckbereiche der oben erwähnten Eckformen mit Radien versehen sein können. Diese Radien weisen bevorzugt ein Verhältnis zum größten Durchmesser des Mittelpunktes zur Gehäusewand - also maximaler Abstand von Mittelpunkt zu Gehäusewand - von 0,2 bis 0,8, bevorzugt von 0,3 bis 0,5, besonders bevorzugt von ca. 0,4 auf. In einem Beispiel würde der Radius an einem Eckbereich 17 mm und der maximale Abstand von dem Gehäusemittelpunkt zu der Gehäusewand 42,5 mm betragen, aus diesem Beispiel würde ein Verhältnis von 0,4 resultieren. Die oben angegebenen Bereiche für das Verhältnis von Eckradius und maximalen Abstand Mittelpunkt-Gehäusewand bergen den Vorteil, dass ein derartiges Gehäuse sowohl einen geringen Luftwiderstandswert aufweist, als auch gut mit der Hand umgreifbar ist und auf einfache und komfortable Weise ein Drehmoment von Hand auf das Gehäuse einbringen lässt. Insbesondere die Einbringung des Drehmomentes von Hand auf das Gehäuse ist für ein werkzeugloses Befestigen und Lösen einzelnen Teilelementen der Antriebsvorrichtung von Bedeutung. Durch die nicht gänzlich kreisrunde Form der Gehäuse können diese einfach und zuverlässig durch Hand, im Falle eines Bajonettmechanismus an den Flanschelementen, montiert und demontiert werden.

Die Materialansammlung kann über deren überwiegende Länge, vorzugsweise über deren vollständigen Länge eine konstante Querschnittskontur aufweisen. Beispielsweise kann damit die Materialansammlung im Zuge der Fertigung des Gehäuses in einem Strangpressverfahren wirtschaftlich erfolgen.

Auch können im Gehäuse mehrere, sich axial erstreckende Materialansammlungen vorgesehen sein, wobei diese vorzugsweise äquidistant über den Querschnitt des Gehäuses angeordnet sind. Durch die Materialansammlung im Innenbereich des Gehäuses kann dieses versteift werden. Insbesondere wenn mehrere Gehäusebauteile über jeweilige Flanschelemente miteinander gekoppelt werden und auf diese "zusammengesteckten" Elemente Biegemomente wirken, nehmen die sich axial erstreckenden Materialansammlungen einen Teil der Kräfte auf. Dies kann ferner dann von besonderem Vorteil sein, wenn die Antriebseinheit aus mehreren voneinander trennbaren Elementen ausgebildet ist. Beispielsweise ist in der bevorzugten Ausführungsform die Befestigung der Übertragungseinheit am Fahrzeug vorgesehen, wobei die Ladeeinheit von der Energiespeichereinheit, die Energiespeichereinheit von der Motoreinheit und die Motoreinheit von der Übertragungseinheit getragen wird, so dass sämtliche Einheiten ausschließlich über die Übertragungseinheit mit dem Fahrzeug tragend verbunden sind. Auch wird durch die Anordnung der Materialansammlungen im Inneren des Gehäuses die Außenfläche des Gehäuses nicht beeinträchtigt. So kann an der Außenfläche eine glatte, kontinuierliche Fläche erreicht werden, welche einen geringen Luftwiderstand (zum Beispiel beim Verbau an einem Fahrrad) aufweist und auch weniger zu Verschmutzung neigt.

Ferner hat es sich als vorteilhaft herausgestellt, wenn die Materialansammlung einen Hohlkanal aufweist, der bevorzugt zum Innenraum des Gehäuses hin geöffnet ist, besonders bevorzugt erstreckt sich der Hohlkanal über die gesamte Länge der Materialansammlung. Dieser Hohlkanal kann als Aufnahmebereich für wenigstens ein Kabel dienen. Auch kann der axiale Hohlkanal als steifigkeitssteigernde Maßnahme konzipiert sein. Schließlich kann der Hohlkanal und/oder die Materialansammlung als Führungsmittel für in den Innenraum des Gehäuses einzubringende Elemente dienen. Höchst bevorzugt weist der Hohlkanal einen zumindest bereichsweise kreisrunden Innenbereich auf, der sich zu seiner, zum Innenraum des Gehäuses weisenden Öffnung hin verjüngt.

Vorteilhaft ist es auch, wenn die Materialansammlung eine über ihre Länge konstante Querschnittsgeometrie aufweist und vorzugsweise die Materialansammlung als Führungsschiene für in das Gehäuse einbringbare Elemente dient. Damit kann die Materialansammlung eine Mehrfachfunktion erfüllen, neben der Führungsfunktion für in das Gehäuse einzubringende Elemente wirkt die Materialansammlung versteifend und als Widerlager für die die Flanschelemente am Gehäuse fixierenden Befestigungselemente. Als in das Gehäuse einbringbare Elemente kann beispielsweise das Motorelement, das Energiespeicherelement (bestehend aus Haltekörper und Energiespeicherzellen), das Getriebeelement und/oder das Ladeelement) angesehen werden.

Eine weitere vorteilhafte Maßnahme sieht vor, dass wenigstens ein Flanschelement zumindest bereichsweise in den Innenraum des Gehäuses einragt, bevorzugt zusätzlich radial in Ausnehmungen des Gehäuses einragt, wobei besonders bevorzugt die radiale Ausnehmung die Querschnittskontur zum Innenraum hin ringartig umläuft. Das zumindest teilweise Versenken des Flanschelementes in das Volumen des Gehäuses hat den Vorteil, dass dieses seitlich durch das Gehäuse umgeben und damit geschützt wird. Auch ergeben sich durch diese Maßnahme weniger nach außen reichende Trennstellen, die wiederum eine Gefahr des Eindringens von Staub oder Feuchtigkeit reduziert. Auch ist das optische Erscheinungsbild des Gehäuses im zusammengesteckten Zustand attraktiver und weist einen geringeren Luftwiderstand auf, wenn die Flanschelemente in die Gehäuse hineinragen und folglich weniger Trennstellen an der äußeren Gehäuseoberfläche vorliegen. Insbesondere, wenn die Flanschelemente überwiegend oder gänzlich axial in die Endbereiche der Gehäuse eingesetzt (versenkt) werden, sind die obigen Vorteile gegeben.

Die zusätzliche radiale Ausnehmung hat den Vorteil, dass bei der Herstellung des Gehäuses selbst, die Toleranzen zum Teil grob gehalten werden können und durch eine nachgelagerte Bearbeitung (zum Beispiel Fräsbearbeitung), die radiale Ausnehmung vorzugsweise einmal ringartig das Gehäuse innenseitig am Endbereich umlaufend, ausgeführt werden kann. Durch diese nachgelagerte Bearbeitung kann der auf die Aufnahme des Flanschelementes abgestimmte Bearbeitungsschritt und dessen benötigte Toleranz auf einfache Weise erreicht werden.

Besonders bevorzugt kann die radiale - vorzugsweise ringartige - Ausnehmung gleichzeitig mit der Bearbeitung des Anschlagbereichs (Abfräsen der Materialansammlung) in das Gehäuse eingearbeitet werden. Damit kann in einem Arbeitsgang sowohl die Maßgenauigkeit für das Einsetzen des Flanschelementes, als auch die Schaffung eines in einer Ebene - rechtwinklig zur Längserstreckung des Gehäuses - liegenden Widerlagers für das Flanschelement gebildet werden.

Auch kann durch die versenkte Anordnung der Flanschelemente in den Gehäusen eine bündige, lediglich eine Trennlinie aufweisende Verbindung der zusammengesteckten Antriebseinheit erreicht werden.

Das Flanschelement wird vorteilhaft in der Endmontagestellung von der Gehäusemantelfläche radial umgeben, vorzugsweise vollständig radial umschlossen.

Im Weiteren wird vorgeschlagen, dass die Außenkontur wenigstens eines Flanschelementes im Wesentlichen eine gleichartige Geometrie wie die Außenkontur der Querschnittsgeometrie des das wenigstens eine Flanschelement aufnehmenden Gehäuses aufweist, vorzugsweise ist die Außenkontur des wenigsten einen Flanschelementes geringfügig kleiner, als die Außenkontur der Querschnittsgeometrie des Gehäuses, besonders bevorzugt ist die Außenkontur des Flanschelementes zu der Außenkontur der Querschnittsgeometrie des Gehäuses um den Faktor 0,01 bis 0,15 ins kleine skaliert. Wenn die Querschnittskontur des Flanschelementes ähnlich zu der Querschnittskontur des Gehäuses ausgebildet ist, kann eine einfache und raumsparende Verbindung dieser beiden Bauteile erreicht werden.

In Weiterbildung der Erfindung sind die Querschnittskonturen der Gehäuse zweier im Endmontagezustand benachbarter Einheiten koaxial zueinander ausgerichtet, vorzugsweise sind die Querschnittskonturen der Gehäuse zweier im Endmontagezustand benachbarter Einheiten zusätzlich in deren Querschnittskonturen zueinander deckend/fluchtend ausgerichtet, wobei besonders bevorzugt die Querschnittskonturen der Gehäuse keine punktsymmetrische Form aufweisen. Durch die koaxiale Ausrichtung der Gehäuse in deren Endmontagestellung wird ein geometrischer Körper für die Antriebsvorrichtung im Endmontagezustand erreicht, der einen geringen Luftwiderstand aufweist. Auch ist die Anfälligkeit für Verschmutzung und das Reinigen der Antriebsvorrichtung erleichtert, da eine eher glatte Oberfläche vorliegt. Auch ermöglicht diese Anordnung eine Verbindung der Bauteile mit wenigen Trennstellen und damit eine bezüglich Dichtigkeit günstige Ausgestaltung.

Als sehr zweckdienlich hat es sich erwiesen, wenn wenigstens zwei der nachfolgenden Einheiten: Motoreinheit, Energiespeichereinheit, Übertragungseinheit und Ladeeinheit, in Endmontagestellung parallel und nebeneinander liegend anordbar und über ein Verbindungelement trennbar miteinander wirkverbindbar sind, wobei das Verbindungselement in seiner Haupterstreckung rechtwinklig zur Haupterstreckungsachse der zwei Einheiten ausgerichtet ist. Mit dem Verbindungselement wird für die auch direkt miteinander nach Art einer geraden Stange verbindbare Motoreinheit und Energiespeichereinheit, eine zweite, parallele Anordnung ermöglicht. Bevorzugt sind die zwei Einheiten in Endmontagestellung mit dem Verbindungselement in deren Querschnittskonturen um eine gerade Linie parallelverschoben zueinander ausgerichtet. Diese Variante ermöglicht eine kompakte Anordnung mit geringem Luftwiderstand. Dies ist insbesondere dann von Vorteil, wenn die Antriebseinheit ohne Verkleidungsbauteile an ein Fahrzeug montiert wird, zum Beispiel bei einem Fahrrad. Dieser Vorteil wird dadurch verstärkt, wenn besonders bevorzugt im Endmontagezustand ein flacher und ein spitzer Bereiche (der Radien) der Querschnittskonturen zueinander gerichtet sind. Durch diese Ausrichtung wird ein größerer Luftspalt zwischen den Gehäuseteilen vermieden, welcher wiederum zur Verschmutzung neigen könnte.

Die Flanschelemente können durch Befestigungsmittel (zum Beispiel Schrauben) am Gehäuse befestigt sein. Diese Schrauben können vorzugsweise parallel zur Gehäuselängsachse ausgerichtet sein und von der Stirnseite von außen in das Innere des jeweiligen Gehäuses eingebracht werden. Die Schraubenköpfe können in der geradlinigen Anordnung der Gehäuse von benachbarten Flanschelementen bzw. Gehäusen überdeckt werden. In der Variante der parallelen Anordnung der Gehäuse können die Befestigungsmittel durch das Verbindungselement verdeckt werden.

Im Weiteren wird vorgeschlagen, ein Motorelement, ein Energiespeicherelement, ein Getriebeelement, einen Elektronikträger und/oder ein Ladeelement ausschließlich über ein Flanschelement an dem jeweiligen Gehäuse tragend zu verbinden, vorzugsweise ist der Zwischenraum von Motorelement und/oder Energiespeicherelement und dem jeweiligen Gehäuse zumindest bereichsweise mit einem Füllmaterial ausgefüllt. Die Gehäuselängen sind größer als die Länge der in das Gehäuse aufgenommenen Elemente. Dadurch dass die in das Gehäuse aufgenommenen Elemente ausschließlich über ein einziges Flanschelement an dem jeweiligen Gehäuse tragend befestigt sind, wird die Anzahl der Fixierungsmittel und Fixierungsbereiche gering gehalten. Neben der Fixierung an dem Flanschelement können vorzugsweise Abstützungen bzw. lose Auflager im Gehäuseinneren vorgesehen sein. Durch derartige - nicht tragende Abstützungen - werden die an der einzigen Fixierungsstelle wirkenden Befestigungsmittel in deren Anzahl oder Dimensionierung weiter reduziert und gleichzeitig bleibt die Anzahl der Fixierungsmittel und die Anforderungen an etwaige Fixierungsbereiche gering.

In einer vorteilhaften Ausführungsform ist zwischen dem Flanschelement und dem Gehäuse wenigstens ein Dichtelement angeordnet ist, wobei das Dichtelement vorzugsweise als ringartiger Körper ausgebildet ist, besonders bevorzugt ist das Dichtelement im Querschnitt L-förmig ausgebildet, wobei insbesondere die L-Schenkel im Vergleich zueinander eine gleiche oder eine maximal um den Faktor 0,7 bis 1,3 unterschiedliche Länge aufweisen. Durch Anordnung eines Dichtelementes zwischen dem Flanschelement und dem Gehäuse können auf einfache Weise die innerhalb des Gehäuses angeordneten Elemente vor einem Eindringen von Staub und/oder Feuchtigkeit geschützt werden. Insbesondere wenn die Flanschelemente für die beiden Enden des Gehäuses gleichartig sind und/oder die Flanschelemente von Motoreinheit, Energiespeichereinheit, Ladeeinheit und/oder Getriebeeinheit gleichartig ausgebildet sind, ist es möglich mit nur einer Variante des Dichtelements die Innenräume der aufgezählten Einheiten abzudichten. Durch die Wahl einer L-förmigen Querschnittsform kann das Dichtelement eine besonders hohe Dichtwirkung in der erfindungsgemäßen Antriebsvorrichtung erwirken. Von den beiden L-Schenkeln wird der quer zur Haupterstreckungsachse des Gehäuses verlaufende Schenkel bei der Montage und dem "Anziehen" der Befestigungselemente - also dem "Andrücken" des Flanschelementes auf die ringförmige Stufe des Gehäuses - mit einer Druckkraft beaufschlagt, diese Druckkraft bildet eine Dichtkraft. Dieser L-Schenkel verläuft also zur Mittellängsachse des Gehäuses hin gerichtet.

In einer besonderen Ausführungsform dieses L-Schenkels ist es vorgesehen, dass an seinem nach innen weisenden Endbereich Ausnehmungen angeordnet sind, diese Ausnehmungen dienen vorzugsweise zur Aufnahme von Befestigungselementen, welche das Flanschelement mit dem Gehäuse verbinden. Die Ausnehmungen können Durchbrüche (wie zum Beispiel kreisrunde Löcher) oder Aussparungen (wie zum Beispiel eine Halbrundaussparung) sein. Der parallel zur Haupterstreckungsachse des Gehäuses ausgerichtete L-Schenkel dient einerseits als Dichtelement und andererseits als Toleranzausgleich für die Fertigungsmaße der entsprechenden Innenbereiche des Gehäuses und der Flanschelementaußenkontur. Vorzugsweise ist die Seitenfläche des Flanschelementes konisch (kegelstumpfförmig) ausgestaltet, wobei sich die Seitenfläche zur zum Gehäuse weisenden Seite hin verjüngt. Damit wird es erreicht, dass bei der Montage des Dichtelementes und der anschließenden Montage und Befestigung des Flanschelementes mittels der Befestigungsmittel eine zum Gehäuse hin wirkende Pressung erreicht wird, welche eine zuverlässige Abdichtung zwischen dem Flanschelement und dem Gehäuse ermöglicht.

Ferner hat es sich als vorteilhaft erwiesen, wenn das Dichtungselement im Endmontagezustand über das freie Ende des Gehäuses und/oder über die außenseitige Abschlusskante des Flanschelementes hinausragt. Mit diesem Überragen des Dichtelementes kann im zusammengesetzten Zustand zweier Gehäuseenden (beispielsweise des Gehäuses der Motoreinheit und des Gehäuses der Energiespeichereinheit) eine dichtende Verbindung erreicht werden, da das Dichtungselement eine Pressung erfährt. Insbesondere wenn beide miteinander zu verbindenden Gehäuse jeweils ein über die Gehäusekontur überragendes Dichtelement aufweisen, kann der Dichtungseffekt verstärkt werden. In diesem Fall berühren sich im Endmontagezustand die Dichtungselemente zweier benachbarter Einheiten, vorzugsweise ist dieser Kontakt ein dichtender Kontakt so dass, die im Zentrum bzw. die innerhalb der Dichtungselemente liegenden mechanischen und/oder elektrischen Mittel zur Umwelt hin abgedichtet, oder zumindest ein Eindringen von Staub oder Flüssigkeiten/Feuchtigkeit erschwert wird.

Auch kann der im Endmontagezustand parallel zur Längserstreckungsachse des Gehäuses verlaufende Schenkel eines im Querschnitt L-förmigen Dichtungselementes eine Länge seiner Innenseite aufweisen, die um den Faktor 0,01 bis 0,20, insbesondere um den Faktor 0,05 bis 0,10 länger ist, als die Dicke des Flanschelementes. Damit ist nicht zwangsläufig ein über das Gehäuseende überragendes Dichtungselement vorgesehen, da auch ein Eindringen eines Flanschelementes eines Verbindungspartners in das mit dem Dichtungselement versehenen Gehäuses vorliegen kann und die erfindungsgemäße Dichtwirkung entfalten kann.

Nach einer vorteilhaften Ausgestaltung der Vorrichtung ist vorgesehen, dass die Antriebsvorrichtung ein Teil eines Hybridantriebs ist, vorzugsweise ein Teil eines Pedelec-Antriebs ist, besonders bevorzugt zusätzlich ein Teil eines Pedelec-Antrieb-Nachrüstsatzes ist.

Schließlich ist ein weiterer erfindungsgemäßer Vorteil dadurch erreichbar, wenn die Befestigung der Übertragungseinheit einer als Nachrüstsatz konzipierten Antriebsvorrichtung am Fahrzeug derart ausgebildet ist, dass die Übertragungseinheit als am Fahrzeug verbleibendes Bauteil und als Schnittstelle zu den lösbar am Fahrzeug zu befestigenden Einheiten der Antriebsvorrichtung konzipiert ist. Die am Fahrzeug verbleibende Übertragungseinheit und die Schnittstelle zwischen Übertragungseinheit und Motoreinheit kann vorteilhaft

In Ausgestaltung der Erfindung wird ferner vorgeschlagen, die Befestigungselemente zur Befestigung der Flanschelemente am Gehäuse derart anzuordnen, dass diese in Endmontagestellung wenigstens zweier verbundener Einheiten durch benachbarte Flanschelemente verdeckt sind, bevorzugt erfolgt die Verbindung zweier Gehäuse ausschließlich durch ein Ineinandergreifen zweier benachbarter Flanschelemente, besonders bevorzugt kann diese Verbindung werkzeuglos in Eingriff und Außereingriff gebracht werden.

Die Befestigungsmittel zur Fixierung der Flanschelemente sind im Gehäuse innenliegend angeordnet. Auch werden die Befestigungsmittel im Endmontagezustand von anderen Bauteilen überdeckt, damit sind die Befestigungsmittel (zum Beispiel die Schraubköpfe) vor Verunreinigungen geschützt. Damit sind im Endmontagezustand die Befestigungsmittel der Flanschelemente zwischen zweier verbundener Einheiten von außen nicht sichtbar. Damit sind beispielsweise die Schraubköpfe nach außen hin vor Verunreinigungen geschützt.

Wenn das Gehäuse eine n-eckige Grundform aufweist, ist es von Vorteil, wenn die Befestigungsmittel und deren Widerlager im Bereich der Eckpunkte angeordnet sind. Dies schafft einen, im Inneren des Gehäuses einer Kreisform angenäherten Freiraum zur Unterbringung weiterer Bauteile.

Vorteilhaft ist die Querschnittskontur des Gehäuses zumindest über einen Abschnitt (vorzugsweise über mindestens die Hälfte) der Länge des Gehäuses konstant ist und weist im wesentlichen die Form eines gleichseitigen Dreiecks, die Form gleichseitigen Fünfecks, die Form eines gleichseitigen Sechsecks, die Form eines regulären n-Ecks und/oder die Form eines Gleichdicks auf. Ferner kann die die Form der Querschnittskontur zusätzlich eine spiegelsymmetrische aber nicht punktsymmetrische Form aufweisen. Auch können zusätzlich die Eckbereiche des Gehäuses mit einem Radius von 13 bis 21 mm versehen sein.

In einer weiteren vorteilhafte Ausführungsform sind die Motoreinheit und die Energiespeichereinheit lösbar miteinander verbindbar und bilden vorzugsweise in der ersten und in der zweiten Betriebsmontagestellung A, B eine steife Einheit, besonders vorzugsweise bildet die Motoreinheit, die Energiespeichereinheit und die Übertragungseinheit in den wenigstens zwei Betriebsmontagestellungen A, B eine steife Einheit, ferner bevorzugt bildet die Motoreinheit, die Energiespeichereinheit, die Übertragungseinheit und die Ladeeinheit in den wenigstens zwei Betriebsmontagestellungen A, B jeweils eine steife Einheit.

Die erfindungsgemäße Antriebsvorrichtung kommt vorteilhafterweise an einem temporär und/oder anteilig mit Muskelkraft antreibbares Fahrzeug, insbesondere Fahrrad, Rollstuhl, Tretroller, Kinderwagen, Schubkarre und dergleichen Fahrrad, Liegerad oder Rollstuhl umfassend eine als Hybridantrieb und/oder Pedelec-Antrieb zur Anwendung.

Die Erfindung ist anhand von Ausführungsbeispielen in den Zeichnungsfiguren näher erläutert. Diese zeigen:
- Fig. 1: eine schematische Darstellung einer an einem Fahrzeug verbauten erfindungsgemäßen Antriebsvorrichtung;
- Fig. 2: eine schematische Explosionsdarstellung einer Motoreinheit von der dem Motorabtrieb entgegengesetzten Seite;
- Fig. 3: eine schematische Explosionsdarstellung der Motoreinheit von der Motorabtriebsseite;
- Fig. 4: eine schematische Explosionsdarstellung der Energiespeichereinheit von der der Energieabgabe entgegengesetzten Seite;
- Fig. 5: eine schematische Explosionsdarstellung der Energiespeichereinheit von der Energieabgabeseite;
- Fig. 6: eine schematische Schnittdarstellung der Motor- und Energiespeichereinheit in zusammengesetzter Stellung;
- Fig. 7: eine schematische Seitenansicht von rechts gemäß Figur 6;
- Fig. 8: eine schematische Querschnittsdarstellung gemäß Schnitt F-F aus Figur 6;
- Fig. 9: eine schematische Querschnittsdarstellung gemäß Schnitt E-E aus Figur 6;
- Fig. 10: eine schematische Querschnittsdarstellung gemäß Schnitt D-D aus Figur 6;
- Fig. 11: eine schematische Querschnittsdarstellung gemäß Schnitt C-C aus Figur 6; ,
- Fig. 12: eine schematische Querschnittsdarstellung gemäß Schnitt B-B aus Figur 6;
- Fig. 13: eine schematische Querschnittsdarstellung gemäß Schnitt A-A aus Figur 6;
- Fig. 14: eine perspektivische Darstellung eines Gehäuses;
- Fig. 15: eine perspektivische Darstellung eines Dichtungselementes;
- Fig. 16: eine perspektivische Darstellung eines Gehäuseendabschnittes mit montiertem Flanschelement und Dichtungselementes;
- Fig. 17: eine schematische Schnittdetaildarstellung der Befestigung von Gehäuse, Flanschelement und Dichtungselement;
- Fig. 18: eine schematische Seitenansicht zweier an einem Verbindungselement befestigter Einheiten;
- Fig. 19: eine perspektivische Darstellung des Verbindungselements mit davon gelöster Energiespeicher- und Motoreinheit.

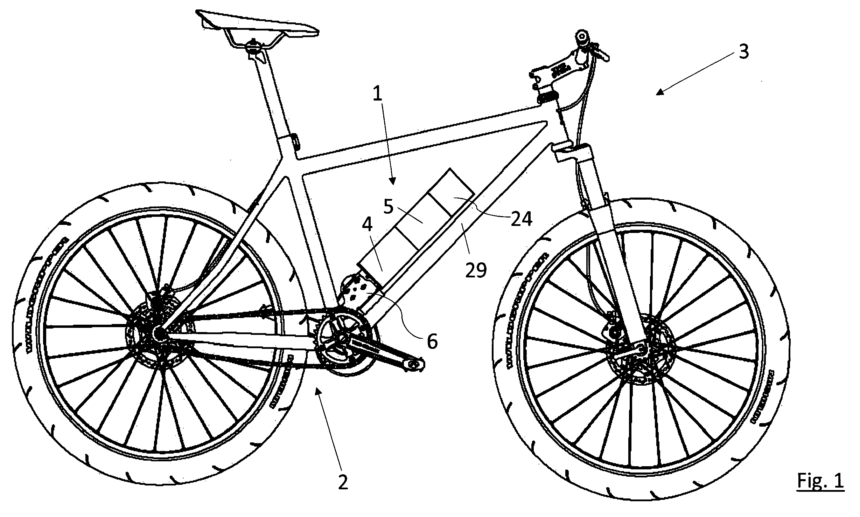

Figur 1 zeigt eine erfindungsgemäße Antriebsvorrichtung 1 in einer gestreckten Ausrichtung verbaut an einem Fahrzeug 3. Die dargestellte Anordnung entlang des Unterrohres 29 des Fahrrades ist nur beispielhaft. Die Antriebsvorrichtung 1 kann sich in deren Längserstreckungsachse auch in andere Richtungen erstrecken, beispielsweise entlang des Sattelrohres.

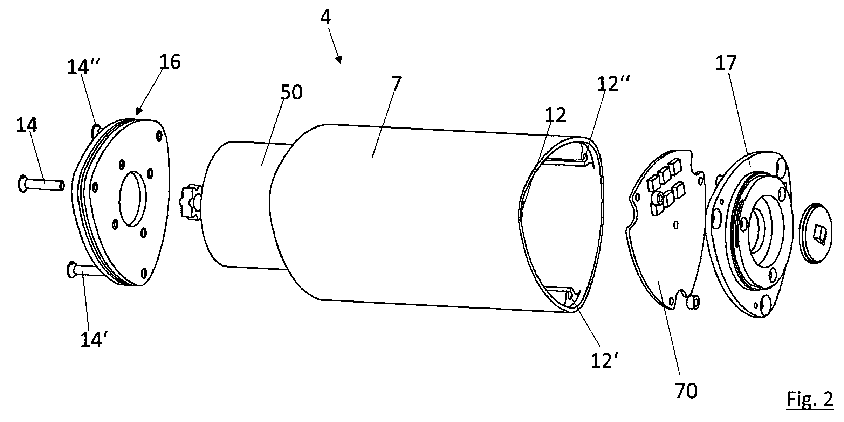

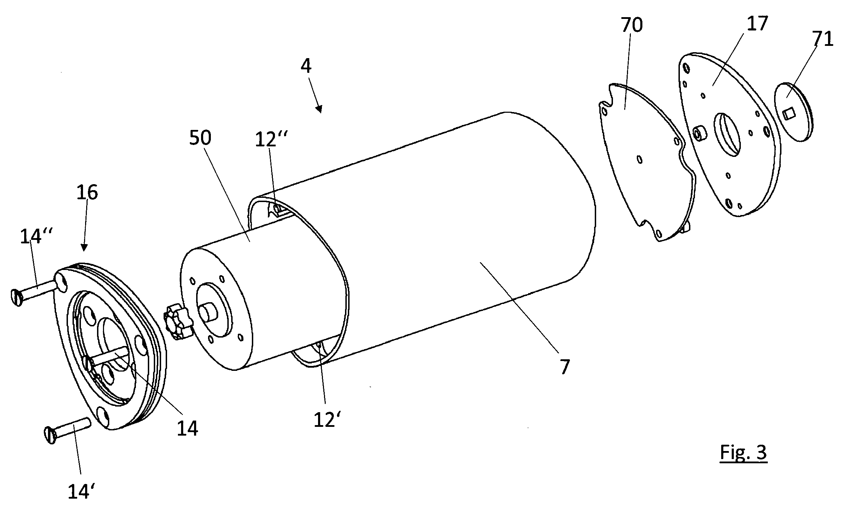

In den Figuren 2 bis 4 sind die, die Bestandteile der Antriebsvorrichtung 1 bildende Motoreinheit 4 und Energiespeichereinheit 5 jeweils mit deren Gehäusen 7, 8 in perspektivischen Explosionsdarstellungen abgebildet. Hieraus ist der Aufbau dieser beiden Einheiten 4, 5 ersichtlich. Gemäß den Figuren 2 und 3 weist die Motoreinheit 4 ein zur Übertragungseinheit 6 gerichtetes Flanschelement 16, ein Motorelement 50, ein Gehäuse 7, einen Elektronikträger 70, ein weiteres, zur Energiespeichereinheit 5 gerichtetes Flanschelement 17 sowie ein Kontaktmittel 71 auf. Das Motorelement 50 kann ausschließlich über Befestigungsmittel (nicht dargestellt) mit der Flanschplatte 16 tragend befestigt sein und sich im Innenraum des Gehäuses 7 lediglich abstützen. Der Elektronikträger 70 ist mit Leiterbahnen und Elektronikbauteilen bestückt und kann von der, der Energiespeichereinheit 5 zugewandten Gehäuseseite in das Innere des Gehäuses 7 montiert werden. Der Elektronikträger 70 wird von dem Flanschelement 17 nach außen überdeckt, wobei der Elektronikträger 70 vorzugsweise ausschließlich an dem Flanschelement 17 tragend befestigt ist und sich vorzugsweise an den Innenseiten des Gehäuses 7 abstützt. Schließlich ist zur Gewährleistung eines elektrischen Kontaktes zwischen dem Elektronikträger 70 und der Energiespeichereinheit 5 ein Kontaktmittel 71 angeordnet, das vorzugsweise nach der Montage des Elektronikträgers 70 und des Flanschelementes 17 montiert wird.

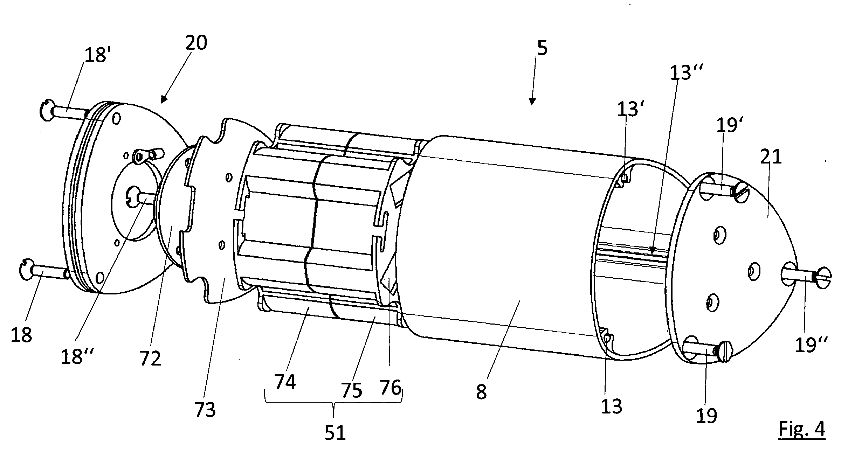

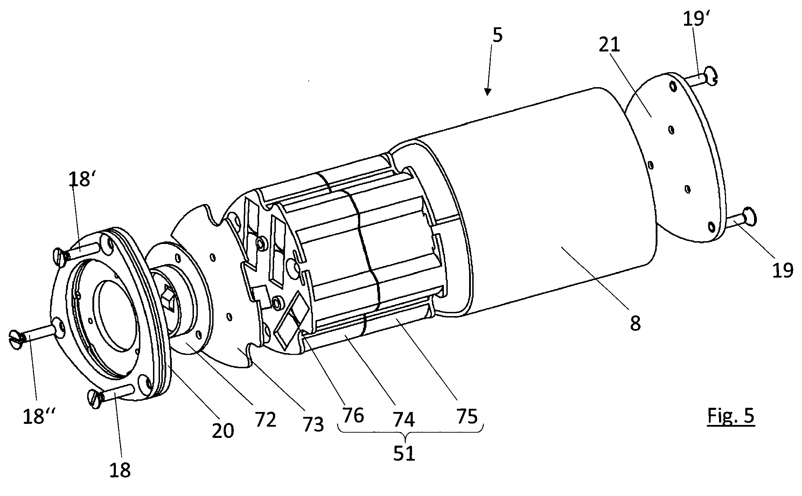

Aus den Figuren 4 und 5 ist der Aufbau der Energiespeichereinheit 5 ersichtlich. Zur Motoreinheit 4 hin ist das Gehäuse 8 mit einem Flanschelement 20 versehen. Dem Flanschelement 20 schließen sich eine Kontaktplatte 72 sowie ein weiterer Elektronikträger 73 an. Das Energiespeicherelement 51 besteht aus zwei Haltekörpern 74, 75 die die Energiespeicherzellen 76 aufnehmen. Auch die Haltekörper 74, 75 sind ausschließlich über das Flanschelement 20 tragend mit dem Gehäuse 8 verbunden, wobei ein abstützender Kontakt der Haltekörper 74, 75 zum Gehäuse 8 gegeben sein kann, eine Sicherung gegen Bewegungen in Längsrichtung des Gehäuses 8 erfolgt jedoch vorzugsweise ausschließlich über die Befestigung der Haltekörper 74, 75 über das Flanschelement 20 an dem Gehäuse 8.

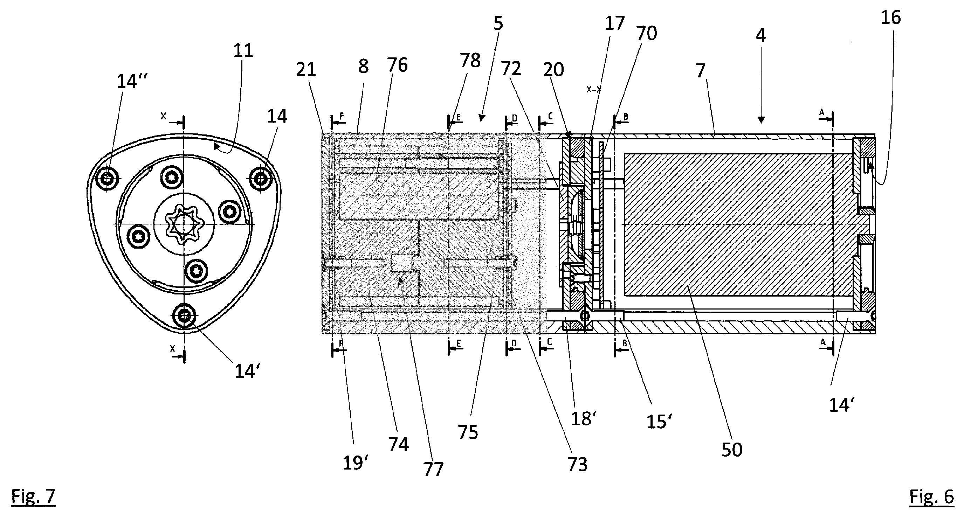

Die Haltekörper 74, 75 weisen zueinander gerichtete Eingriffs- und Gegenelemente 77 (Fig. 6) auf, so dass die Haltekörper 74, 75 im Sinne einer Vormontageeinheit bereits die Energiespeicherzellen 76 aufnehmen und gegen ein Herausfallen halten. Auch können die Halteelemente 74, 75 in deren zusammengesteckten Position miteinander über ein Fixiermittel (nicht dargestellt) gegen ein ungewollten Lösen befestigt sein. Hierzu kann das Fixiermittel (nicht dargestellt) beispielsweise als Schraube ausgebildet und in entsprechende Aufnahmeöffnungen 78 (Fig. 6) der Halteelemente 74, 75 eingreifen. Damit lassen sich die Haltekörper 74, 75 zusammen mit den Energiespeicherzellen 76 als eine vorgruppierte Baugruppe gemeinsam auf einfache Weise in das Gehäuse 8 der Energiespeichereinheit 5 montieren. Alternativ oder zusätzlich können die Haltekörper 74, 75 auch durch eine Schnapp-Rast-Verbindung (geclipst) miteinander als Vormontagebaugruppe verbunden sein (nicht dargestellt).

Figur 6 zeigt einen Längsschnitt der Motor- und Energiespeichereinheit 4, 5 in zusammengesetzter Position gemäß dem Schnitt X-X aus Figur 7. An dem der Energiespeichereinheit 5 zugewandten Flanschelement 17 ist der Elektronikträger 70 befestigt. An dem der Übertragungseinheit 6 zugewandten Flanschelement 16 ist das Motorelement 50 befestigt. Der Freiraum zwischen Motorelement 50 und Gehäuse 4 kann zumindest bereichsweise mit Füllmaterial (nicht dargestellt) versehen sein.

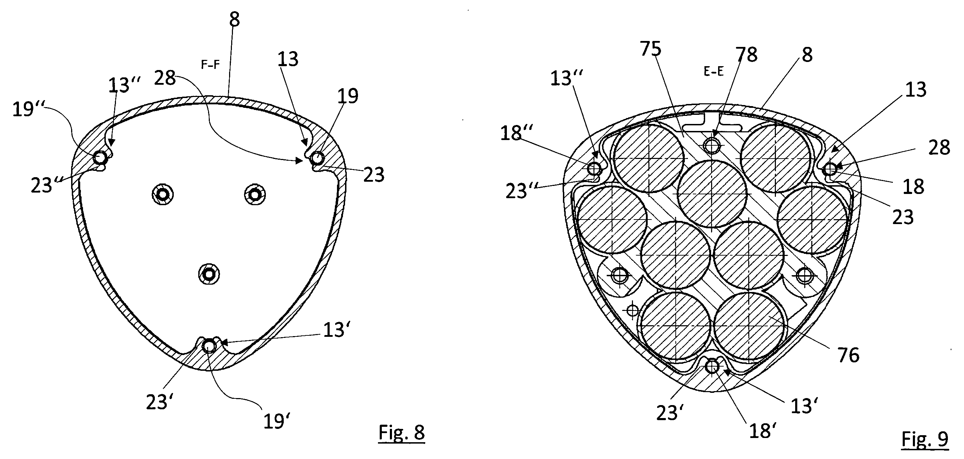

Die Querschnittsdarstellungen der Figuren 8 bis 13 entsprechen den in der Figur 6 dargestellten Schnittebenen A-A bis F-F. Insbesondere sind die Materialansammlungen 22, 22', 22" im Gehäuse 7 und die Materialansammlungen 23, 23', 23" in dem Gehäuse 8, jeweils in den Eckbereichen 12, 12', 12", 13, 13', 13", der Gehäuse 7, 8 ersichtlich. Die Materialansammlungen 22, 22', 22", 23, 23', 23" weisen eine über den Verlauf der Längsachse konstante Querschnittskontur auf. Ferner sind die Materialansammlungen 22, 22', 22", 23, 23', 23" jeweils mit einem Hohlkanal 28 versehen, welcher zum Innenraum des Gehäuses 7, 8 hin geöffnet ist. In den Endbereichen der Gehäuse 7, 8 greifen in den Hohlkanal 28 Befestigungselemente 14, 14', 14", 15, 15', 15", 18, 18', 18", 19, 19', 19" zur Fixierung der Flanschelemente 16, 17, 20, 21 ein.

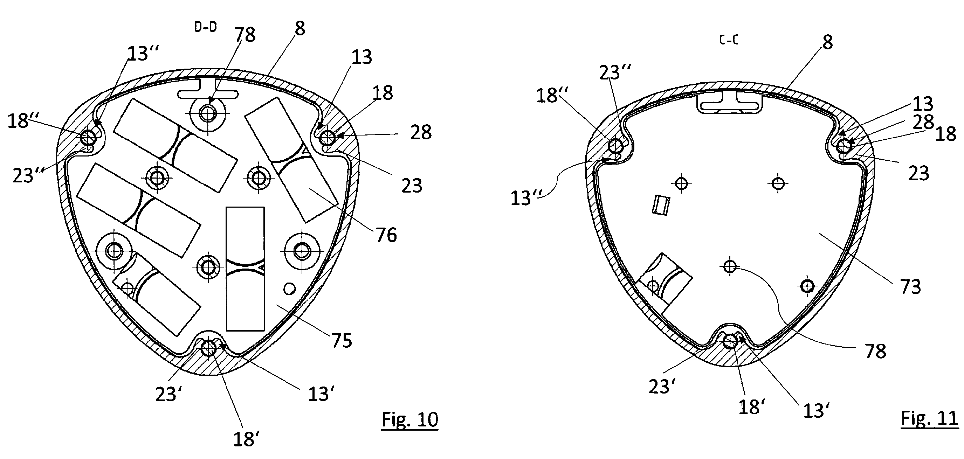

In den Figuren 9 und 10 sind eine vorteilhafte Anordnung der Energiespeicherzellen 76 gezeigt, hierbei bilden die drei innersten Energiespeicherzellen 76 zueinander eine Dreickeckanordnung (Draufsicht), vorzugsweise in Form eines gleichseitigen Dreiecks. Die äußeren Energiespeicherzellen 76 sind parallel zu den Dreiecksseiten der inneren Energiespeicherzellen 76 platziert sind. Diese Anordnung der zylindrischen Energiespeicherzellen 76 ermöglicht einerseits eine kompakte Anordnung innerhalb des Gehäuses 8, als auch ausreichend restlichen Raum zum Platzieren von Leitungen (nicht dargestellt) und Verbindungsmitteln. Die Haltekörper 74, 75 sind entsprechend der Anordnung der Energiespeicherzellen 76 mit Ausnehmungen zur Aufnahme der Energiespeicherzellen 76 ausgebildet und halten diese in der gewünschten Anordnung zueinander und zu dem Gehäuse 8.

Die Figur 11 zeigt den im Gehäuse 8 aufgenommenen weiteren Elektronikträger 73. Dieser ist über Ausnehmungen 78 für Fixiermittel (nicht dargestellt) mit dem Haltekörper 75 verbunden.

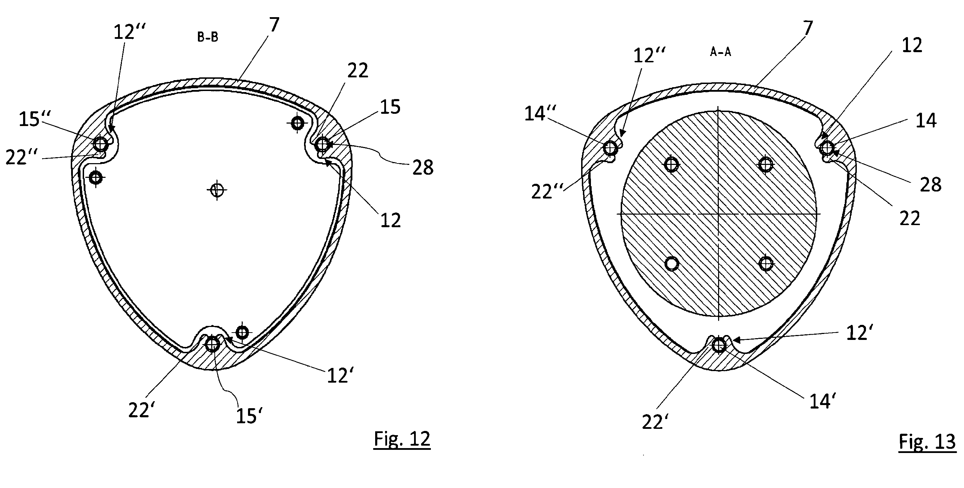

Die Figuren 12 und 13 zeigen ähnliche Details wie oben erläutert, jedoch für die Motoreinheit 4. Es ist ersichtlich, dass in dem, im Querschnitt die Form eines Gleichdicks aufweisenden Gehäuses 7, ein im Querschnitt kreisrundes Motorelement 50 eingesetzt ist.

Aus den Figuren 8 bis 13 ist ferner ersichtlich, dass die in die Gehäuse 7, 8 aufgenommenen Elemente (wie beispielsweise die Haltekörper 74, 75; die Elektronikträger 70 und 73) in deren Eckbereichen Ausnehmungen aufweisen, in welchen die Materialansammlungen 22, 22', 22", 23, 23', 23" einragen. Dieses Ineinandergreifen führt zu einem Verdrehschutz der eingesetzten Elemente innerhalb des Gehäuses 7, 8 und ferner zu einer erleichterten Montage, da durch das Ineinandergreifen auch eine Führung während der Montage in das Gehäuse 7, 8 gewährleistet wird.

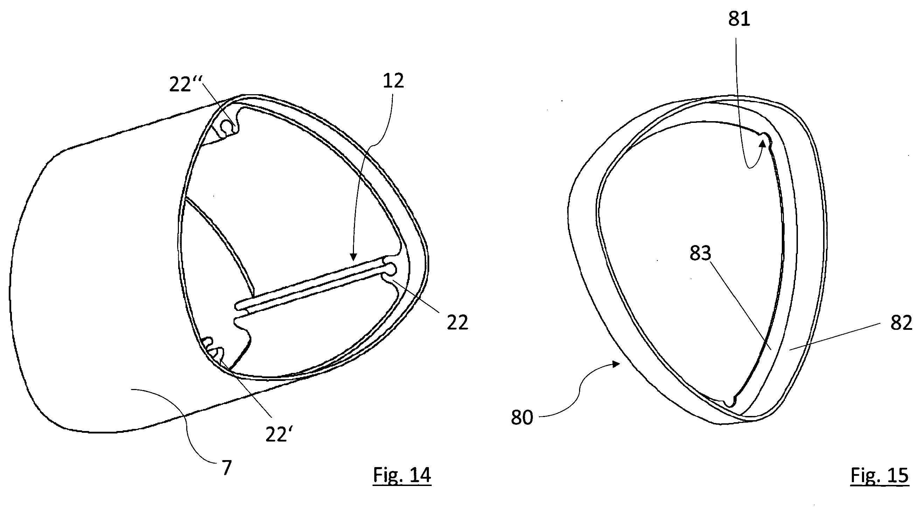

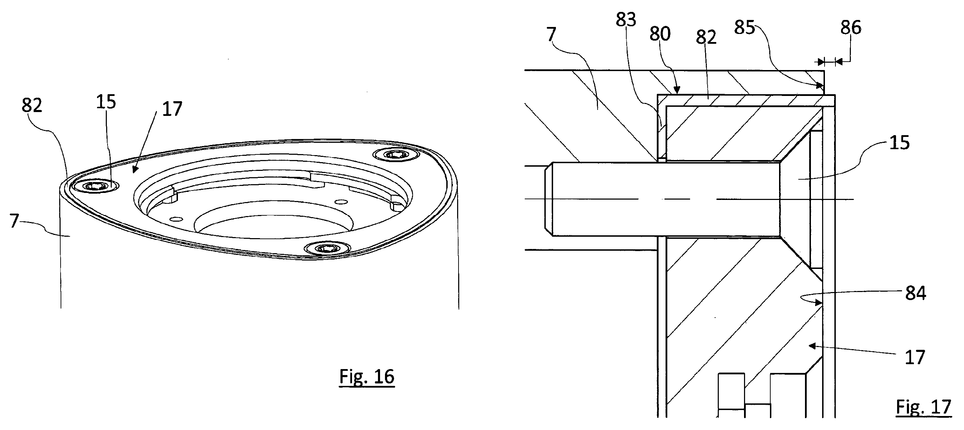

Die Figuren 14 bis 17 zeigen Details zu der Ausführung des Dichtungselementes 80 und des Gehäuses 7, 8 allgemein. Das Dichtungselement 80 weist die Form eines geschlossenen Rings auf, wobei die Grundgeometrie des Rings der des Gehäuses 7, 8 entspricht. In den Eckbereichen sind an der Innenseite des Dichtungselementes 80 Ausnehmungen 81 angeordnet. Diese Ausnehmungen 81 dienen zur Aufnahme der Befestigungselemente 14', 14", 15, 15', 15", 18, 18', 18", 19, 19', 19". Das Dichtungselement 80 ist ferner im Querschnitt L-förmig gestaltet, siehe Figuren 15 und 17. Dabei ist ein Schenkel 82 axial und ein weiterer Schenkel 83 radial ausgerichtet. Die Ausnehmungen 81 sind im radial verlaufenden Schenkel 83 angeordnet.

Das Dichtungselement 80 ist zwischen dem Flanschelement 17 und dem Gehäuse 7, 8 angeordnet und wird im montierten Zustand durch das Anzugsmoment der Befestigungselemente 15 (hier: einer Senkkopfschraube) indirekt über das Flanschelement 17 mit einer Anpresskraft beaufschlagt, welche zumindest den radialen Schenkel 83 anpresst.

Der axiale Schenkel 82 steht über die Abschlusskante 84 des Flanschelementes 17 und/oder über die Abschlusskante 85 des Gehäuses 7, 8 mit einem Abstand 86 über. Dieser Überstand ermöglicht einen dichtenden Kontakt mit weiteren Dichtungselementen 80 (der Motoreinheit 4, Energiespeichereinheit 5, der Übertragungseinheit 6 und/oder der Ladeeinheit 24) im zusammengesetzten Zustand der Motoreinheit 4, Energiespeichereinheit 5, der Übertragungseinheit 6 und/oder der Ladeeinheit 24.

Aus den Figuren 14 und 17 ist ein weiteres Detail ersichtlich, wonach die Enden der Gehäuse der Motoreinheit 4, der Energiespeichereinheit 5, der Ladeeinheit 24 und/oder der Übertragungseinheit 6, hier beispielhaft das Gehäuse 7 dargestellt, im Innenbereich einen bearbeiteten Bereich (zum Beispiel Stufe 30) aufweisen können. So sind die Gehäuseinnenseiten mit einer Stufe 30, die nachträglich (das heißt nach einem Strangpressverfahren) in das Gehäusebauteil 7 eingebracht wird versehen. Diese Stufe 30 oder auch diese zusätzliche radiale Ausnehmung hat den Vorteil, dass bei der Herstellung des Gehäuses 7 selbst, die Toleranzen zum Teil grob gehalten werden kann und erst durch eine nachgeordnete, zum Beispiel fräsende, Bearbeitung die Stufe 30/die radiale Ausnehmung ausgebildet wird. So kann die kritischere Toleranz (notwendig für ein Einsetzen des Flanschelementes 16, 17, 20, 21) sowohl in radialer als auch in axialer Richtung durch die Nachbearbeitung (zum Beispiel fräsende Bearbeitung) gewährleistet werden kann.

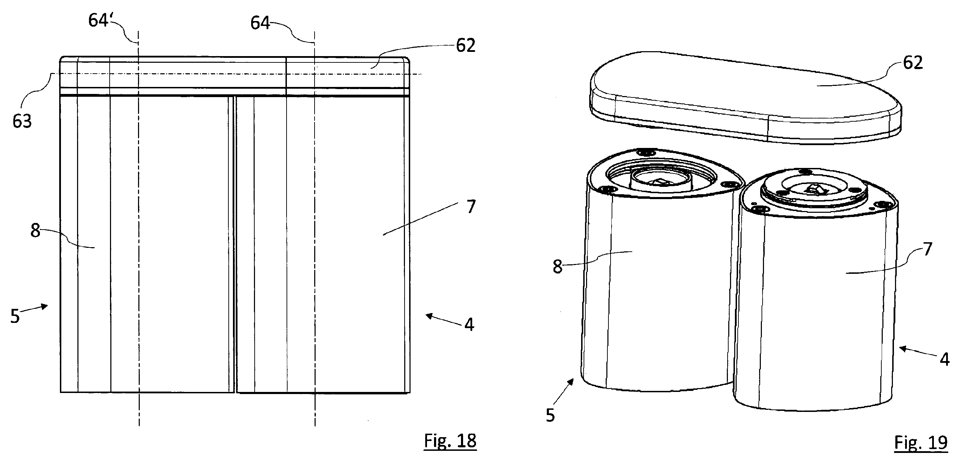

In den Figuren 18 und 19 ist das Verbindungselement 62 dargestellt. In Figur 18 (Endmontagezustand) sind die Motoreinheit 4 und die Energiespeichereinheit 5 parallel zueinander ausgerichtet und an einem Verbindungselement 62 lösbar befestigt. In der dargestellten Ausführungsform verlaufen die Haupterstreckungsachsen 64 und 64' parallel zueinander ausgerichtet. Die Haupterstreckungsachsen 64, 64` der Motoreinheit 4 und Energiespeichereinheit 5 sind jeweils rechtwinklig zur Haupterstreckungsachse 63 des Verbindungselementes 62 ausgerichtet. Damit wird eine kompakte Anordnung der Motoreinheit 4 und der Energiespeichereinheit 5 erreicht.

Figur 19 zeigt die Motoreinheit 4 und die Energiespeichereinheit 5 in einem vom Verbindungselement 62 gelösten Zustand. Es ist erkennbar, dass der Verbindungsmechanismus zur Anbindung der Einheiten 4, 5 an das Verbindungselement 62 dem gleichen Mechanismus entspricht, wie der Mechanismus, welcher die Verbindung von Motoreinheit 4 und Energiespeichereinheit 5 ermöglicht (Bajonettverbindung).

Die zwei Einheiten 4, 5 sind in Endmontagestellung (Fig. 18) mit dem Verbindungselement 62 in der Draufsicht um eine gerade Linie, nämlich die Haupterstreckungsachse 63 des Verbindungselementes 62 parallelverschoben zueinander ausgerichtet. Auch ist aus Figur 19 ersichtlich, dass im Endmontagezustand (Fig. 18) ein flacher und ein spitzer Bereiche (der Radien) der Querschnittskonturen der Gehäuse 7, 8 der zwei Elemente 4, 5 zueinander gerichtet sind.

Neben der dargestellten Variante, kann es alternativ auch vorteilhaft sein, die beiden Gehäuse 7, 8 zueinander nach Art einer spiegelsymmetrischen Anordnung im Endmontagezustand anzuordnen (nicht dargestellt). Also so, dass jeweils der flache Bereich der Querschnittskonturen der Gehäuse 7, 8 zueinander oder jeweils der spitze Bereich der Querschnittskonturen der Gehäuse 7, 8 zueinander ausgerichtet sind.

### BEZUGSZEICHENLISTE:

- 1: Antriebsvorrichtung
- 2: Triebstrang
- 3: Fahrzeug
- 4: Motoreinheit
- 5: Energiespeichereinheit
- 6: Übertragungseinheit
- 7: Gehäuse von 4
- 8: Gehäuse von 5

- 11: Mantelinnenfläche von 7 bis 10
- 12, 12', 12": Eckbereich von Querschnittskontur von 7
- 13, 13', 13": Eckbereich von Querschnittskontur von 8
- 14, 14', 14": Befestigungselement von 4
- 15, 15', 15": Befestigungselement von 4.
- 16: Flanschelement von 4 zu 6 hin gerichtet
- 17: Flanschelement von 4
- 18, 18', 18": Befestigungselement von 5
- 19, 19', 19": Befestigungselement von 5
- 20: Flanschelement von 5
- 21: Flanschelement von 5
- 22, 22', 22": Materialansammlung von 7
- 23, 23', 23": Materialansammlung von 8
- 24: Ladeeinheit
- 28: Hohlkanal von 7 und 8
- 29: Unterrohr
- 30: Stufe von 7

- 50: Motorelement
- 51: Energiespeicherelement
- 62: Verbindungselement
- 63: Haupterstreckungsachse von 62
- 64, 64': Haupterstreckungsachse von 4, 5

- 70: Elektronikträger von 4
- 71: Kontaktmittel von 4
- 72: Kontaktplatte von 5
- 73: Elektronikträger von 5
- 74: Haltekörper von 51
- 75: Haltekörper von 51
- 76: Energiespeicherzellen
- 77: Eingriffs- und Gegenelemente von 74, 75
- 78: Ausnehmung von 73

- 80: Dichtungselement
- 81: Ausnehmung von 80
- 82: Schenkel (axial)
- 83: Schenkel (radial)
- 84: Abschlusskante von 16, 17, 20, 21
- 85: Abschlusskante von 7, 8
- 86: Abstand

## Patentansprüche

1. Antriebsvorrichtung (1) für ein zumindest temporär und/oder anteilig mit Muskelkraft antreibbares Fahrzeug (3), insbesondere Fahrrad, Rollstuhl, Tretroller, Kinderwagen, Schubkarre und dergleichen, wobei die Antriebsvorrichtung (1) eine elektrische Motoreinheit (4);
eine die Motoreinheit (4) versorgende Energiespeichereinheit (5) und
eine, die Leistung der Motoreinheit (4) in einen Triebstrang (2) einbringende Übertragungseinheit (6) umfasst, wobei
die Motoreinheit (4) und/oder die Energiespeichereinheit (5) lösbar am Fahrzeug (3) befestigbar ist und die Motoreinheit (4) und die Energiespeichereinheit (5) jeweils ein Gehäuse (7, 8) umfassen,
**dadurch gekennzeichnet, dass**
im Bereich der Stirnseite des Gehäuses (7) der Motoreinheit (4) ein erstes Flanschelement (17) und im Bereich der Stirnseite des Gehäuses (8) der Energiespeichereinheit (8) ein zweites Flanschelement (20) angeordnet ist wobei die Gehäuse (7, 8) über die Flanschelemente (17, 20) miteinander trennbar verbindbar sind.

2. Antriebsvorrichtung nach Anspruch 1,
**dadurch gekennzeichnet, dass**
das Gehäuse (7) der Motoreinheit (4) und das Gehäuse (8) der Energiespeichereinheit (5) eine gleichartige Querschnittskontur aufweisen, vorzugsweise eine im Wesentlichen identische Querschnittskontur aufweisen, besonders bevorzugt eine identische Querschnittskontur aufweisen.

3. Antriebsvorrichtung nach Anspruch 1 oder 2,
ein Gehäuse einer Ladeeinheit (24) und/oder ein Gehäuse der Übertragungseinheit (6) eine mit dem Gehäuse (8) der Energiespeichereinheit (5) gleichartige, vorzugsweise im Wesentlichen identische, besonders bevorzugt identische Querschnittskontur aufweist/aufweisen.

4. Antriebsvorrichtung nach einem der vorhergehenden Ansprüche,
**dadurch gekennzeichnet, dass**
das und/oder die Gehäuse (7, 8) durch ein Strangpressverfahren und/oder ein Sinterverfahren gefertigt ist, vorzugsweise durch ein Kunststoffstrangpressverfahren oder durch ein Leichtmetallstrangpressverfahren, insbesondere durch ein Aluminiumstrangpressverfahren gefertigt ist.

5. Antriebsvorrichtung nach einem der vorhergehenden Ansprüche,
**dadurch gekennzeichnet, dass**
an einer Innenseite einer Mantelfläche (11) des Gehäuses (7, 8) wenigstens eine sich zumindest bereichsweise axial erstreckende Materialansammlung (22, 22', 22", 23, 23', 23") vorgesehen ist, bevorzugt ist die Materialansammlung (22, 22', 22", 23, 23', 23") in Eckbereichen (12, 12', 12", 13, 13', 13") der Querschnittskontur angeordnet, besonders bevorzugt ist die Materialansammlungen (22, 22', 22", 23, 23', 23") derart ausgebildet, dass diese als Widerlager zur Einbringung von Befestigungselementen (14, 14', 14", 15, 15', 15", 18, 18', 18", 19, 19', 19") zur Halterung eines Flanschelementes (16, 17, 20, 21) an zumindest einer Stirnseite des Gehäuses (7, 8) verwendbar ist.

6. Antriebsvorrichtung nach Anspruch 5,
**dadurch gekennzeichnet, dass** die Materialansammlung (22, 22', 22", 23, 23', 23") einen Hohlkanal (28) aufweist, der bevorzugt zum Innenraum des Gehäuses (7, 8) hin geöffnet ist, besonders bevorzugt erstreckt sich der Hohlkanal (28) über die gesamte Länge der Materialansammlung (22, 22', 22", 23, 23', 23"), höchst bevorzugt weist der Hohlkanal (28) einen kreisrunden Innenbereich auf, der sich zu seiner, zum Innenraum des Gehäuses (7, 8) weisenden Öffnung hin verjüngt.

7. Antriebsvorrichtung nach Anspruch 5 oder 6,
**dadurch gekennzeichnet, dass**
die Materialansammlung (22, 22', 22", 23, 23', 23") eine über seine Länge konstante Querschnittsgeometrie aufweist und vorzugsweise die Materialansammlung (22, 22', 22", 23, 23', 23") als Führungsschiene für in das Gehäuse (7, 8) einbringbare Elemente dient.

8. Antriebsvorrichtung nach einem der vorhergehenden Ansprüche,
**dadurch gekennzeichnet, dass**
wenigstens ein Flanschelement (16, 17, 20, 21) zumindest bereichsweise in den Innenraum des Gehäuses (7, 8) einragt, bevorzugt zusätzlich radial in Ausnehmungen des Gehäuses (7, 8) einragt, wobei besonders bevorzugt die radiale Ausnehmung des Gehäuses (7, 8) die Querschnittskontur zum Innenraum hin ringartig umläuft.

9. Antriebsvorrichtung nach einem der vorhergehenden Ansprüche,
**dadurch gekennzeichnet, dass**
die Außenkontur wenigstens eines Flanschelementes (16, 17, 20, 21) im wesentlichen eine gleichartige Geometrie wie die Außenkontur der Querschnittsgeometrie der das wenigstens eine Flanschelement (16, 17, 20, 21) aufnehmenden Gehäuses (7, 8) aufweist, vorzugsweise ist die Außenkontur des wenigsten einen Flanschelementes (16, 17, 20, 21) geringfügig kleiner als die Außenkontur der Querschnittsgeometrie des Gehäuses (7, 8) besonders bevorzugt ist die Außenkontur des Flanschelementes (16, 17, 20, 21) zu der Außenkontur der Querschnittsgeometrie des Gehäuses (7, 8) um den Faktor 0,01 bis 0,15 ins kleine skaliert.

10. Antriebsvorrichtung nach einem der vorhergehenden Ansprüche,
**dadurch gekennzeichnet, dass**
die Querschnittskonturen der Gehäuse (7, 8) zweier im Endmontagezustand benachbarter Einheiten (4, 5, 6, 24) koaxial zueinander ausgerichtet sind, vorzugsweise sind die Querschnittskonturen der Gehäuse (7, 8) zweier im Endmontagezustand benachbarter Einheiten (4, 5, 6, 24) zusätzlich in deren Querschnittskonturen zueinander deckend/fluchtend ausgerichtet, wobei besonders bevorzugt die Querschnittskonturen der Gehäuse (7, 8) keine punktsymmetrische Form aufweisen.

11. Antriebsvorrichtung nach einem der vorhergehenden Ansprüche,
**dadurch gekennzeichnet, dass**
wenigstens zwei der Einheiten (4, 5, 6, 24):
- Motoreinheit (4),
- Energiespeichereinheit (5),
- Übertragungseinheit (6) und
- Ladeeinheit (24)
in Endmontagestellung parallel und nebeneinander liegend anordenbar und über ein Verbindungelement (62) trennbar miteinander wirkverbindbar sind, wobei das Verbindungselement (62) in seiner Haupterstreckung (63) rechtwinklig zur Haupterstreckungsachse (64, 64') der zwei Einheiten (4, 5, 6, 24) ausgerichtet ist, bevorzugt sind die wenigstens zwei Einheiten (4, 5, 6, 24) in Endmontagestellung mit dem Verbindungselement (62) in deren Querschnittskonturen um eine gerade Linie, vorzugweise um die Haupterstreckungsachse (63) des Verbindungselementes (62), parallelverschoben zueinander ausgerichtet, besonders bevorzugt sind im Endmontagezustand ein flacher und ein spitzer Bereiche (der Radien) der Querschnittskonturen der wenigstens zwei Elemente (4, 5, 6, 24) zueinander gerichtet.

12. Antriebsvorrichtung nach einem der vorhergehenden Ansprüche,
**dadurch gekennzeichnet, dass**
ein Motorelement (50), ein Energiespeicherelement (51), ein Getriebeelement, ein Elektronikträger (70, 73) und/oder ein Ladeelement ausschließlich über ein Flanschelement (16,17, 20, 21) mit dem jeweiligen Gehäuse (7, 8) tragend verbunden ist.

13. Antriebsvorrichtung nach einem der vorhergehenden Ansprüche, **dadurch**
**gekennzeichnet, dass**
zwischen dem Flanschelement (16, 17, 20, 21) und dem Gehäuse (7, 8) wenigstens ein Dichtungselement (80) angeordnet ist, wobei das Dichtungselement (80) vorzugsweise als ringartiger Körper ausgebildet ist, besonders bevorzugt ist das Dichtungselement (80) im Querschnitt L-förmig ausgebildet.

14. Antriebsvorrichtung nach Anspruch 13,
**dadurch gekennzeichnet, dass**
das Dichtungselement (80) im Endmontagezustand über das freie Ende des Gehäuses (7, 8) und/oder über die außenseitige Abschlusskante (84) des Flanschelementes (16, 17, 20, 21) hinausragt.

15. Antriebsvorrichtung nach einem der vorhergehenden Ansprüche,
**dadurch gekennzeichnet, dass** die Antriebsvorrichtung ein Teil eines Hybridantriebs ist, vorzugsweise ein Teil eines Pedelec-Antriebs ist, besonders bevorzugt zusätzlich ein Teil eines Nachrüstsatzes ist.

16. Antriebsvorrichtung nach einem der vorhergehenden Ansprüche, **dadurch**
**gekennzeichnet, dass**
die Befestigung der Übertragungseinheit (6) einer als Nachrüstsatz konzipierten Antriebsvorrichtung (1) am Fahrzeug (3) derart ausgebildet ist, dass die Übertragungseinheit (6) als am Fahrzeug (3) verbleibendes Bauteil und als Schnittstelle (10) zu den lösbar am Fahrzeug (3) zu befestigenden Einheiten (4, 5, 24) der Antriebsvorrichtung (1) konzipiert ist.

17. Antriebsvorrichtung nach einem der vorhergehenden Ansprüche, **dadurch**
**gekennzeichnet, dass**
dass das Gehäuse (7) der Motoreinheit (4) und das Gehäuse (8) der Energiespeichereinheit (5) gleichartig ausgebildet sind.
